# EUROPEAN PATENT SPECIFICATION

(11) **EP 1 512 643 B1**
(45) Date of publication and mention of the grant of the patent: **18.06.2008**
(21) Application number: 04255033.5
(22) Date of filing: 20.08.2004
(51) Int. Cl.: B65D 90/62, B65G 69/18

(54) **Closure assemblies for stores of flowable material**
Verschlusseinheit für Schüttgutbehälter
Ensemble de fermetures pour conteneur de matières en vrac

(30) Priority: 03.09.2003 GB 0320581
(43) Date of publication of application: 09.03.2005
(73) Proprietor: ISL (R&D) LTD, Moreton-in-Marsh GL56 0PE (GB)
(72) Inventor: Semenko, Ivan, Moreton-in-Marsh, GL56 OPE (GB)
(74) Representative: Hocking, Adrian Niall

(56) References cited:
- WO-A-99/64767
- GB-A- 2 348 636
- GB-A- 2 377 926
- US-A- 5 385 437
- US-A- 5 775 544

## Description

This invention relates to a closure assembly for a store of flowable material, such as a silo or an intermediate bulk container, and to a store equipped with such a closure assembly.

It is well known, e.g. from GB-A-2348636, to provide a closure device in the form of a cone valve to close a discharge opening of a store (such as a hopper) of flowable material. However, particulate material in the form of tablets, granules, pellets and the like, can jam the cone valve open or can be compressed by the cone valve thereby disintegrating. This is particularly disadvantageous in the case of pharmaceutical products.

It is also known from US5385437A, which describes a closure assembly according to the preambule of claim 1, to provide a device for charging a pressurised enclosure, particularly a blast furnace. The device comprises a closing off bell which is movable inside a hopper and which is used to close off a discharge opening. A lower sealing off member is also provided below the bell. The lower sealing off member is raised initially, before the bell is then raised. However, problems similar to those described above can still occur.

According to a first aspect of the present invention, there is provided a closure assembly for a store of flowable material, comprising a first closure device and a second closure device which is vertically slidable relative to the first closure device, so that when in use the closure assembly is opened by a closure operating member acting on the second closure device, the second closure device will move upwardly from a closed to an open condition while the first closure device remains in a closed condition and subsequently the second closure device will move upwardly from its closed to an open condition, characterised in that the first closure device has an elongate guide rod depending therefrom and the guide rod is slidably received within a bore of the second closure device.

Preferably, the first closure device comprises first and second parts, the first part being more flexible than the second part and being arranged to adopt a closed position relative to the store prior to the second part adopting a closed position relative to the store during a closing operation of the closure assembly.

Preferably, the first closure device has a downwardly diverging upper surface and is typically of conical shape.

According to a second aspect of the present invention there is provided a store of flowable material having a closure assembly according to the first aspect of the present invention and a discharge opening closable by the closure assembly.

The store may be in the form of a silo or of an intermediate bulk container.

The invention will now be more particularly described, by way of example, with reference to the accompanying drawings wherein:
Figure 1 is a sectional view through one embodiment of a closure assembly according to the present invention, together with a store having a discharge opening closable by the closure assembly and an operating member for opening and closing the closure assembly, and
Figures 2a to 2d show the closing sequence of a slightly different embodiment of a closure assembly according to the present invention.

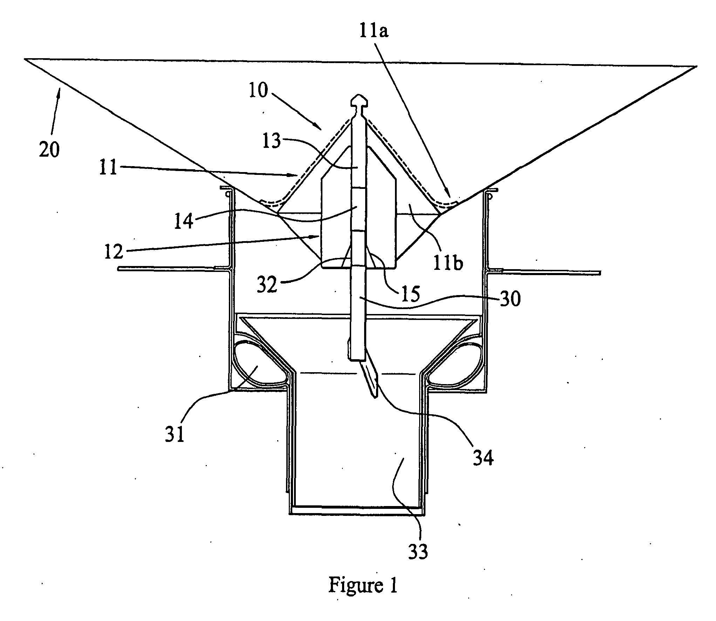

Referring firstly to Figure 1, the closure assembly 10 shown therein is intended to close the discharge opening of a store 20 of flowable particulate material, such as a silo or an intermediate bulk container containing particulate material such as tablets, granules or pellets. The closure assembly 10 is operated by a closure operating member 30 movable upwardly by an actuator 31.

The closure assembly 10 comprises a first closure device 11 which is in the form of a cone valve having a conical upper surface and a second closure device 12 which is vertically slidable relative to the first closure device 11 and which is in the form of a plug.

The first closure device 11 comprises first and second parts 11a and 11b. The first part 11a is more flexible than the second part 11b and is typically formed of rubber or flexible plastics material. The second part 11b is formed of relatively rigid plastics material or steel.

The first part 11a lies on top of the second part 11b and its lowermost rim extends below the lowermost rim of the second part 11b when the closure assembly is in an open condition so that as the closure assembly moves from an open to a closed condition, the first part 11a reaches a closed position prior to the second part 11b as described hereinafter.

The first closure device 11 has an elongate guide member in the form of a guide rod 13 depending from its apex and this guide rod 13 is slidably received within a bore 14 of the second closure device 12.

The closure operating member 30 is in the form of a probe having a frusto-conical head 32 which mates with a frusto-conical recess 15 at the lower end of the bore 14. The probe 30 is connected to a through flow device 33 by struts 34 and is raised or lowered, together with the through flow device 33, by the actuator 31, which is in the form of a toroidal pneumatic actuator, in a manner more fully described in GB-A-2348636.

Starting from a closed position of the closure assembly, the probe 30 will initially raise the plug 12 and this plug 12 will slide relative to the cone valve 11 until either the plug 12 makes contact with the underside of the cone valve 11 or the probe 30 makes contact with the lower end of the guide rod 13. The cone valve 11 will then be raised together with the plug 12 to fully open the discharge opening of the store.

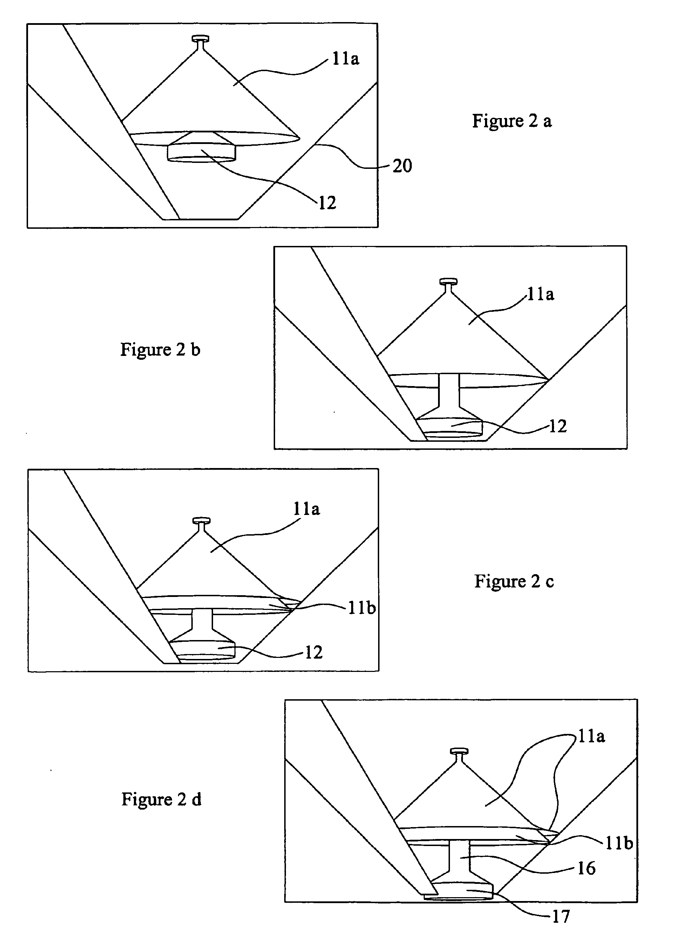

The closure assembly shown in Figure 2 is slightly different from that shown in Figure 1 in that the plug 12 comprises a stem portion 16 which slidably receives the guide rod 13 and a closure portion 17 at the lower end of the stem portion 16.

Starting from a fully open condition as shown in Figure 2a, the cone valve 11 will be lowered by the probe (not shown) together with the plug 12. During the lowering operation, the lowermost edge of the first part 11a of the cone valve will initially make contact with the frusto-conical inner wall of the store 20. As the probe further lowers the cone valve 11 and the plug 12, the lowermost edge of the first part 11a of the cone valve 11 will fold upwards as shown in Figure 2b until the second part 11b of the cone valve makes contact with the inner wall of the store 20. When the first part 11a makes contact with the wall of the store 20, it will stop any further flow of particulate material so that when the second part 11b makes contact with the wall of the store, no particulate material will be crushed. Any remaining particulate material below the cone valve 11 will then drain out prior to the plug 12 plugging the discharge opening at the lowermost end of the store 20 to make a fail safe closure.

The embodiments described above prevent damage to particulate material in the store 20 and also ensure that the closure assembly does not jam partly open. Also, the two part seal provided on the one hand between the cone valve 11 and the wall of the store 20 and on the other hand between the probe and the store will ensure stability of the closure assembly with no tipping or leakage.

In use, the actuator 31 will move the probe 30 upwards to open the closure assembly 10 and can then be operated to pulse the closure assembly upwards and downwards in order to provide a steady flow of particulate material through the discharge opening of the store as more particularly described, for example, in GB-A-2348636.

In certain circumstances, the first closure device 11 could be formed of a single part rather than being of two-part form as described above. Also, it need not be a cone valve.

## Claims

1. A closure assembly for a store of flowable material, comprising a first closure device (11) and a second closure device (12) which is vertically slidable relative to the first closure device, so that when in use the closure assembly is opened by a closure operating member (30) acting on the second closure device, the second closure device will move upwardly from a closed to an open condition while the first closure device remains in a closed condition and subsequently the second closure device will move upwardly from its closed to an open condition, **characterised in that** the first closure device (11) has an elongate guide rod (13) depending therefrom and the guide rod is slidably received within a bore (14) of the second closure device (12).

2. A closure assembly as claimed in claim 1, wherein the first closure device (11) comprises first and second parts (11a, 11b), the first part (11a) being more flexible than the second part (11b) and being arranged to adopt a closed position relative to the store (20) prior to the second part adopting a closed position relative to the store (20) during a closing operation of the closure assembly.

3. A closure assembly as claimed in claim 1 or claim 2, wherein the first closure device (11) has a downwardly diverging upper surface.

4. A closure assembly as claimed in claim 3, wherein the first closure device (11) is of conical shape.

5. A store of flowable material having a closure assembly as claimed in any one of the preceding claims and a discharge opening closable by the closure assembly.

6. A store as claimed in claim 5, in the form of a silo.

7. A store as claimed in claim 5, in the form of an intermediate bulk container.

## Patentansprüche

1. Verschlussbaugruppe für einen Speicher für fließfähiges Material, der eine erste Verschlussvorrichtung (11) und eine zweite Verschlussvorrichtung (12), die im Verhältnis zur ersten Verschlussvorrichtung in Vertikalrichtung verschoben werden kann, umfasst, so dass, wenn bei Anwendung die Verschlussbaugruppe durch ein Verschlussbetätigungselement (30), das auf die zweite Verschlussvorrichtung einwirkt, geöffnet wird, sich die zweite Verschlussvorrichtung nach oben von einem geschlossenen zu einem offenen Zustand bewegen wird, während die erste Verschlussvorrichtung in einem geschlossenen Zustand verbleibt, und sich anschließend die zweite Verschlussvorrichtung nach oben von ihrem geschlossenen zu einem offenen Zustand bewegen wird, **dadurch gekennzeichnet, dass** die erste Verschlussvorrichtung (11) eine längliche Führungsstange (13), die an derselben hängt, hat und die Führungsstange verschiebbar innerhalb einer Bohrung (14) der zweiten Verschlussvorrichtung (12) aufgenommen wird.

2. Verschlussbaugruppe nach Anspruch 1, wobei die erste Verschlussvornchtung (11) einen ersten und einen zweiten Teil (11a, 11b) umfasst, wobei der erste Teil (11a) flexibler ist als der zweite Teil (11b) und dafür angeordnet ist, während eines Schließvorgangs der Verschlussbaugruppe eine geschlossene Position im Verhältnis zu dem Speicher (20) einzunehmen, bevor der zweite Teil eine geschlossene Position im Verhältnis zu dem Speicher (20) einnimmt.

3. Verschlussbaugruppe nach Anspruch 1 oder Anspruch 2, wobei die erste Verschlussvorrichtung (11) eine nach unten auseinandergehende obere Fläche hat.

4. Verschlussbaugruppe nach Anspruch 3, wobei die erste Verschlussvorrichtung (11) von kegelförmiger Gestalt ist.

5. Speicher für fließfähiges Material, der eine Verschlussbaugruppe nach einem der vorhergehenden Ansprüche und eine Auslassöffnung, die durch die Verschlussbaugruppe verschlossen werden kann, hat.

6. Speicher nach Anspruch 5, in der Form eines Silos.

7. Speicher nach Anspruch 5, in der Form eines Schüttgut-Zwischenbehälters.

## Revendications

1. Assemblage de fermeture pour un conteneur de matériau fluide, comprenant un premier dispositif de fermeture (11) et un deuxième dispositif de fermeture (12), pouvant glisser verticalement par rapport au premier dispositif de fermeture, de sorte que, lorsqu'il est en service, l'assemblage de fermeture est ouvert par un élément opérationnel de fermeture (30) agissant sur le deuxième dispositif de fermeture, le deuxième dispositif de fermeture se déplacera vers le haut, d'un état fermé vers un état ouvert, le premier dispositif de fermeture restant dans un état fermé, le deuxième dispositif de fermeture se déplaçant ensuite vers le haut, de son état fermé vers un état ouvert, **caractérisé en ce que** le premier dispositif de fermeture (11) comporte une tige de guidage allongée (13) à extension, la tige de guidage étant reçue de manière coulissante dans un alésage (14) du deuxième dispositif de fermeture (12).

2. Assemblage de fermeture selon la revendication 1, dans lequel le premier dispositif de fermeture (11) comprend des première et deuxième parties (11a, 11b), la première partie (11a) étant plus flexible que la deuxième partie (11b) et étant agencée de sorte à adopter une position fermée par rapport au conteneur (20) avant l'adoption d'une position fermée de la deuxième partie par rapport au conteneur (20) au cours d'une opération de fermeture de l'assemblage de fermeture.

3. Assemblage de fermeture selon les revendications 1 ou 2, dans lequel le premier dispositif de fermeture (11) comporte une surface supérieure divergeant vers le bas.

4. Assemblage de fermeture selon la revendication 3, dans lequel le premier dispositif de fermeture (11) a une forme conique.

5. Conteneur pour un matériau fluide, comportant un assemblage de fermeture selon l'une quelconque des revendications précédentes, et une ouverture de décharge pouvant être fermée par l'assemblage de fermeture.

6. Conteneur selon la revendication 5, sous forme d'un silo.

7. Conteneur selon la revendication 5, sous forme d'un conteneur intermédiaire pour matériau en vrac.
